# EUROPEAN PATENT SPECIFICATION

(11) **EP 1 471 801 B1**
(45) Date of publication and mention of the grant of the patent: **09.04.2008**
(21) Application number: 03701568.2
(22) Date of filing: 10.02.2003
(51) Int. Cl.: A23L 1/16, A23L 1/30

(54) **IMPROVED PASTA PRODUCT AND METHOD FOR PREPARATION THEREOF**
VERBESSERTES TEIGWARENPRODUKT UND VERFAHREN ZU SEINER HERSTELLUNG
PATES ALIMENTAIRES AMELIOREES ET LEUR PROCEDE DE PREPARATION

(30) Priority: 08.02.2002 FI 20020265
(43) Date of publication of application: 03.11.2004
(73) Proprietor: Raisio Oyj, 21200 Raisio (FI)
(72) Inventor: ALHO-LEHTO, Pirjo, FIN-21410 Vanhalinna (FI); AALTO, Tiina, FIN-20900 Turku (FI); EKBLOM, Jari, FIN-21210 Raisio (FI)
(74) Representative: Karvinen, Leena Maria
(86) International application number: PCT/FI2003/000102
(87) International publication number: WO 2003/065822

(56) References cited:
- WO-A1-99/43218
- WO-A2-01/32029
- US-A- 4 976 982
- US-B1- 6 190 720
- DATABASE WPI Week 199813, Derwent Publications Ltd., London, GB; Class D11, AN 1998-133411, XP002978874 & HU 75 901 A (TOTA A.B.) 28 May 1997
- DATABASE WPI Week 198950, Derwent Publications Ltd., London, GB; Class D11, AN 1989-366804, XP002978875 & JP 1 273 551 A (KYOKUTO INT. KK) 01 November 1989

## Description

The present invention relates to the field of food and nutrition. Especially it concerns improved pasta products. The new product has improved cooking quality and in addition improved health value due to added ingredients. The invention refers more closely to methods, products and uses according to what is defined in the preambles of the independent claims.

Pasta products are currently consumed in increasing amounts, and there is a growing need for good tasting pastas with high nutritional value and high cooking quality. Pasta is easily made food and, consequently, it is in great demand in modem cooking, and also in institutional kitchens.

Traditionally, pasta is made of durum wheat *(Triticum durum*), but also soft wheat (*Triticum aestivum*) is used. This pasta is mild tasting and light yellow. Special pastas include different spices, colouring agents and/or added fibres (e.g. more wholesome flour or fibre enriched flour).

The textural characteristics of pasta products play an essential role in determining the final acceptance by consumers. The texture is much more important in traditional pasta-consuming countries than e.g. taste or colour. Textural characteristics can be defined as firmness, cohesiveness and elasticity, and they are directly related to cooking resistance. Stickiness of the surface is an unwanted characteristic. Cooked pasta should be "al dente" when eaten.

Pastas made of soft wheat have softer and less "al dente" structure than durum pastas. The addition of larger amounts of fibre can break the protein film on the pasta surface and thus the starch amylose can exudate out into the cooking water. Using soluble dietary fibres, such as oat β-glucan, gives better cooking quality than using insoluble fibres (Marconi et al., Cereal Chemistry 77(2) 2000 pp. 133-139). Addition of β-glucan has a negative softening effect on the texture of the pasta. However, the negative effects of fibres can be improved to give reasonably good cooking quality when used together with added gluten or other proteins (Gillmore et al., US 4,976,982; Marconi, Cereal Foods World 46(11) 2001 pp. 522-530).

Irrespective of the species of wheat used in pasta making, the cooking quality of pasta is very much dependent on the quality of wheat and wheat gluten. Addition of other cereals and/or dietary fibres tends to weaken the gluten matrix and to increase the amount of amylose leaking to the cooking water, therefore limiting the amount of fibre, which can be used to enrich the pasta with.

The most important factors concerning the cooking quality of pasta are the cooking loss and the texture of cooked pasta. The stickiness of the surface of the cooked pasta is closely related to the solubility of starch. During cooking the starch granules are gelatinised and swollen, and the amylose-part of the starch may exudate out of the granules into the cooking water. Amylose can be seen microscopically on the surface of cooked pasta. In 100% durum pasta a continuous protein phase can be seen on the surface of the pasta. Overcooking or addition of such ingredients, which lower or weaken the gluten content of pasta can affect this protein phase and promote the exudation of amylose.

The effect of fat content of pasta flour to the cooking quality has been investigated. Flour lipids form complexes with starch in the pasta extrusion and/or drying process. Removal of lipids from pasta flour increases the amylose content of the cooking water (Dahle and Muenchow, Cereal Chemistry 45(5) 1968 pp. 464-468). The effect of some added fat components to cooking quality of pasta has also been investigated. Vegetable oils did not improve the cooking quality, neither did they decrease the stickiness of pasta, whereas addition of certain emulsifiers, especially monoglycerides, decreased the stickiness and improved cooking tolerance (Matsuo et al., Cereal Chemistry 63(6) 1986 pp. 484-489; Rho et al., Cereal Chemistry 66(4) 1989 pp. 276-282). Monoglycerides have also been added to commercial pasta products, especially to institutional kitchen pastas, to increase cooking tolerance. The disadvantage of monoglycerides is that they are food additives, which are not acceptable in pasta products in the EU.

It is known that plant sterols, as well as esters thereof, have serum cholesterol level lowering effects. Stanol fatty acid esters and the effects thereof, as well as a suitable method for their preparation, are disclosed in US Patent No. 5,502,045. Dietary intake of 2 to 3 g/day of plant sterol equivalents is reported to lower the serum LDL levels in man by on average 10% -14%, thus reducing the risk of coronary heart disease (CHD).

Dietary fibres contain insoluble and soluble substances. The insoluble polysaccharides include mainly cellulose and hemicellulose. The soluble fibres include β-glucans (oat, barley), pentosans (rye), plant extrudates (gums, inulin), mucilages, legume seed gums, seaweed polysaccharides, bacterial polysaccharides, resistant starch etc.

In the present invention it was surprisingly noticed that adding plant sterol esters improves the cooking quality and the firmness of pasta products. The improvement is especially important in pastas containing also other cereals than durum wheat, and even more important in high-fibre pastas.

The pasta products according to the invention comprise plant sterol esters, or combinations of plant sterol esters and dietary fibres, preferably soluble dietary fibres from cereals or vegetables. The combination of plant sterol esters and dietary fibres can be used in any pasta products containing different cereals.

The present invention therefore provides improvement in sensory properties, such as structure and mouthfeel of pasta products, especially in pastas with high fibre contents. High fibre contents very often cause organoleptic problems in pastas. In the present invention the problem has been solved by addition of plant sterol esters to high-fibre pastas.

The present invention is characterized by what is disclosed in the characterizing parts of the independent claims.

The primary object of the present invention is thus a method for improving the cooking quality of a pasta product comprising adding a plant sterol ester composition to a pasta dough or to any component of the pasta dough, comprising at least a cereal component and water, before conventional processing of the dough to a pasta product.

Preferably the plant sterol ester composition is sprayed to the cereal component or part of the cereal component.

The secondary object of the present invention is thus a pasta product with improved cooking quality, wherein the pasta product comprises on product dry weight 0.27-14.5 weight-% of a plant sterol ester composition, 65.5-99.73 weight-% of a cereal component and 0-20 weight-% of an additive composition.

Preferably the pasta product has a water content of 8-30 weight-%. And more preferably it is a dry pasta product having a water content of 8-13 weight-%, preferably 11-13 weight-%, and most preferably about 12 weight-%. Another preferred embodiment is a fresh pasta product having a water content of 19-26 weight-%, preferably 21-23 weight-%, and most preferably about 22 weight-%.

Preferably, the cereal component comprises at least 4.0 weight-% of dietary fibre calculated on pasta product dry weight.

Another preferred embodiment of the invention is directed to a pasta product, wherein the amount of plant sterol ester composition (calculated as sterol equivalents) is from 0.15 to 8 g and the amount of dietary fibres is from 1 to 20 g per 100 g of the dry pasta product (moisture content 8-13 weight-%, preferably about 12%).

The third object of the present invention is thus the use of plant sterol esters in the preparation of pasta products for improving the cooking quality of the pasta product.

The fourth object of the present invention is thus an improved process for preparing a pasta product, the improvement comprising adding to a pasta dough or to any of its components plant sterol esters, thereby obtaining a pasta product with improved cooking quality.

Preferably the plant sterol esters comprises at least 55 weight-% of plant stanol fatty acid esters, preferably at least 85 weight-% and most preferably at least 95 weight-%.

A preferred embodiment is a process wherein the amount of added plant sterol esters is from 0.15 to 8 g (calculated as sterol equivalents) and the amount of dietary fibres in the dry pasta product with a moisture content of 8-13 weight-%, preferably about 12 weight-%, is from 1 to 20 g per 100 g, preferably at least 3.5 g per 100 g.

In another preferred embodiment of the process the pasta comprises at least 4.0 weight-% of dietary fibres calculated on the dry weight of the pasta product.

The pasta products of the present invention contain a plant sterol ester composition. The plant sterol ester composition can be added to conventional wheat pasta made of durum wheat. It can also be added to pasta made of soft wheat or to mixtures of soft wheat and durum, or to a pasta made of durum wheat and/or soft wheat together with darker fractions of wheat flour, or together with other cereal flours, or to a pasta as any of these but with additional dietary fibres.

The present invention provides a new type of food products, wherein the health value is improved. A combination of slowly absorbed carbohydrates and a plant sterol ester composition is realised in the pasta products according to the invention. The invention also provides an opportunity to make more competitive pastas made at least partly of soft wheat or other cereals. The addition of a plant sterol ester composition to the pasta product improves the "al dente" texture and/or the mouthfeel i.e. the feeling of the surface of the pasta product.

All percentages referred to in this specification are given as weight-% if not otherwise stated.

As used here, the term " a plant sterol ester composition" includes plant sterol esters in an amount of at least 55%, preferably at least 85% and most preferably at least 95%.

As used here, the term "plant sterol ester" refers to plant sterols having at least 55%, preferably at least 85% and most preferably at least 95% of the plant sterols in esterified form.

As used here, the plant sterol esters include both sterols and saturated sterols, i.e. stanols esterified e.g. with fatty acids (2-24 carbon atoms, and being saturated, monounsaturated or polyunsaturated, including also special fatty acids such as conjugated fatty acids, e.g. CLA, and EPA and DHA), hydroxybenzoic acids or hydroxycinnamic acids (ferrulic or coumaric acids) or other organic acids such as e.g. di- or tricarboxylic acids and/or hydroxy acids, or with any combination of said acids. Preferred acids are fatty acids of a length of C12-C18 and mixtures containing any of these.

In this specification the plant sterols include 4-desmethyl sterols, 4-monomethyl sterols and 4,4-dimethyl sterols (triterpene alcohols) and the stanols include 4-desmethyl stanols, 4-monomethyl stanols and 4,4-dimethyl stanols. Typical 4-desmethyl sterols are sitosterol, campesterol, stigmasterol, brassicasterol, 22-dehydrobrassicasterol and Δ5-avenasterol. Typical 4,4-dimethyl sterols are cycloartenol, 24-methylenecycloartenol and cyclobranol. Typical stanols are sitostanol, campestanol and their 24-epimers, cycloartanol and saturated forms obtained by saturation of e.g. triterpene alcohols (cycloartenol, 24-methylenecycloartenol and cyclobranol). The plant sterols include all possible natural mixtures or any blends of named sterols and/or stanols as well as any individual sterol or stanol. Preferred plant sterols include sitosterol, stigmasterol, sitostanol and campestanol and mixtures containing any of these.

According to the invention the plant sterol ester composition preferably comprises at least one plant sterol fatty acid ester. The plant sterol fatty acid ester is technically very suitable for incorporation into pasta products, and it is especially preferred as it has very good organoleptic properties, enabling production of the pasta products of the present invention with very good organoleptic properties. Preferably the plant sterol ester is a plant stanol ester because its absorption is negligible and the use thereof is therefore safer. Also the textural properties of pastas containing plant stanol fatty acid esters are excellent. Most preferred are therefore the plant stanol fatty acid esters for use in pasta products according to the invention. In a preferred embodiment the plant sterol ester composition contains at least 55%, preferably at least 85%, and most preferably at least 95% of plant stanol fatty acid esters.

The amount of the plant sterol ester composition may be 0.27-14.5% of the pasta product by dry weight, preferably 0.45-7.3 weight-% and more preferably 0.9-5.4 weight-%.

The cereal component may contain one or more of the cereals chosen from the group consisting of durum wheat, soft wheat, oat, rye, barley, rice, corn, triticale, buckwheat, millet, sorghum, cereal flour enriched with dietary fibres, wholesome cereal flour and mixtures of any of these. There may be 65.5-99.73% of the cereal component in the pasta product by dry weight, preferably 82.7-99.5 weight-%, and more preferably 89.6-99.1 weight-%. In a preferred embodiment the cereal component comprises only partly durum wheat, and in another embodiment there are no substantial amounts of durum wheat, i.e. not more than 5 weight-% of the cereal composition dry weight.

The additive composition includes taste delivering and colouring components containing e.g. tomato, spinach or other vegetable or plant materials, or e.g. octopus, as well as traditional seasonings like spices or herbs. Also proteins from e.g. soybean or egg and vitamins and minerals may be included in the additive composition. The additive composition, if present, may include 0-20% of one or more of these components in the pasta products per dry weight, preferably 0-10%, more preferably 0-5%. Often the pasta products contain no additive composition.

The process for preparing basic pasta consists of mixing a dough of flour and water in vacuum, pressing it through bronze or teflon-lined dies and drying at high or very high temperatures. With special dies and cutters pastas can be formed to desired sizes and forms. Therefore, pasta products can be long cut spaghetti or short cut pastas, or special products, such as lasagne and tagliatelle. After forming the pasta is dried to moisture content of about 12% (varying between 8-13%, preferably 11-13%). This type of pasta is called dry pasta. Drying methods of pasta can be based on lower temperatures and longer time or higher/very high temperatures and shorter time. Currently used methods are based on higher temperatures, giving good cooking quality pastas with strong surface characteristics. Pasta can also be fresh, which means that the final drying step has been omitted. Fresh pastas are also cooked before eating, but usually for a shorter time. The moisture content of fresh pasta is about 22% (varying between 19-26%, preferably 21-23%).

The plant sterol ester composition can be added to the pasta dough at any stage of the pasta preparation process, e.g. at a late stage when processing the dough. It may also be added to the water or to the additive composition. Preferred is though to add it directly into the cereal component by any known method, preferably by spraying. The addition is preferably accomplished by spraying the plant sterol ester composition into the cereal or part of the cereal composition. When preparing high fibre pastas the plant sterol ester composition is suitably sprayed into the high fibre part of the cereal component. When using soft wheat it is also preferred to treat that with the plant sterol ester composition. The aim during the addition is to make as small particle sizes as possible of the plant sterol ester composition and spread the particles out on the cereal component as effectively as possible.

By "dietary fibres" is here meant both soluble and insoluble dietary fibres (e.g. fibre enriched material such as enriched flour, fibre concentrates or purified flour). The dietary fibres include fibres of cereal origin, such as wheat, oat, rye, barley, rice, corn, buckwheat, triticale, millet or sorghum, or they can be fibres from any other vegetable material, such as soy, potato, sugar beet, beans, peas, carrots, or of other plant origin, such as guar, pectin, psyllium, resistant starch, inulin, arabinoxylans or oligofructans, or of microbial origin. Most important are soluble dietary fibres.

The amount of dietary fibres in the pasta may vary from 1 to 20%, preferably it is at least 3.5% in a pasta product with 12% moisture. This corresponds to 1.14-22.7% of dietary fibres calculated on pasta product dry weight, preferably at least 4.0%.

The improvement in the cooking quality was especially noticed in pastas enriched with whole-wheat flour (i.e. pasta products containing partly or totally darker fractions of durum or soft wheat flour than conventional pastas) or any flour of other cereals than wheat, or in pastas with other added dietary fibre. In all such high-fibre pastas the level of dietary fibres is from 3.5 to 20%, preferably 4-15% calculated on a dry pasta product with a water content of about 12%, which corresponds to 4.0-22.7%, preferably 4.5-17.0% of dietary fibres on pasta product dry weight. In a fresh pasta (moisture content about 22%) the corresponding amounts of dietary fibres are 3.1-17.7%, preferably 3.5-13.3%.

However, the improving effect on cooking quality was noticed also in plain durum pastas with an added plant sterol ester composition. The improved cooking resistance is especially important in case the pasta is overcooked. Overcooking includes all excess steps or "stress" conditions the pasta product is exposed to after optimal cooking according to the instructions for the pasta in question (usually 8 minutes for dry pasta and 1 to 3 minutes for fresh pasta). Such situations occur in institutional kitchens when pasta is stored and/or transported as ready, i.e. is kept warm for long periods. Often pastas should be rinsed with cold water after cooking to receive an optimal mouthfeel. If this step is omitted or defectively performed it might lead to an overcooked pasta as well as if the pasta is cooked for too long a time. Especially for pastas containing also some other cereal components e.g. soft wheat in addition to durum wheat this improving effect following from the addition of a plant sterol ester composition was emphasized.

In high-fibre pasta products with a moisture content of about 12% the level of dietary fibres in the product is from 3.5 to 20%, preferably 4-15%, more preferably 5-8%. The amount of soluble dietary fibre in such products is from 1 to 10%, preferably 1.5-6%, and more preferably 2-4%. These values correspond to 4.0-22.7%, preferably 4.5-17.0%, and more preferably 5.7-9.1% dietary fibres calculated on pasta product dry weight, and to 1.1-11.4%, preferably 1.7-6.8%, and more preferably 2.3-4.5% soluble dietary fibres calculated on pasta product dry weight.

The level of plant sterol esters (calculated as sterol equivalents) in a pasta product with moisture content of about 12% should be from 0.15 to 8%, preferably 0.25-4%, and more preferably 0.5-3% of the dry pasta product (moisture 12%). These values correspond to 0.17-9.1%, preferably 0.28-4.5% and more preferably 0.57-3.4% of the plant sterol ester composition (calculated as sterol equivalents) calculated on pasta product dry weight. Furthermore, this corresponds to 0.24-12.8%, preferably 0.4-6.4%, and more preferably 0.8-4.8% of a plant sterol fatty acid ester composition (calculated as esters) in a dry pasta product with about 12% moisture, and to 0.27-14.5%, preferably 0.45-7.3% and more preferably 0.9-5.4% of the plant sterol ester composition calculated on a dry weight bases.

A preferred embodiment of the invention is a pasta product (moisture content 8-13%, most preferably about 12%) containing 3.5 to 20% of dietary fibre, whereof at least 1%, preferably 1 to 10%, more preferably 1.5 to 6% is soluble, and 0.25 to 5%, preferably 0.4 to 4% of a plant sterol ester composition (calculated as sterol equivalents). This pasta product has a good cooking quality, good organoleptic properties, contains slowly absorbed carbohydrates and has also a cholesterol-lowering effect.

Another preferred embodiment of the invention is a pasta product (moisture content 19-26%, most preferably about 22%) containing 3.1 to 17.7% of dietary fibre, whereof at least 0.88%, preferably 0.88 to 8.8%, more preferably 1.3 to 5.3% is soluble, and 0.22 to 4.4%, preferably 0.35 to 3.5% of a plant sterol ester composition (calculated as sterol equivalents). This pasta product has a good cooking quality, good organoleptic properties, contains slowly absorbed carbohydrates and has also a cholesterol-lowering effect.

It was surprisingly also realised that the weight ratio of a plant sterol ester composition (calculated as sterol equivalents) to soluble dietary fibre at a range of 1:0.4 to 1:5 gave an unexpectedly good improvement of the cooking quality of the pasta and/or an improvement in the health value of the pasta.

The main advantages of the present invention, achieved by combining the two ingredients, i.e. a sufficient amount of soluble dietary fibres and plant sterols into a pasta product, are:
- improvement in the cooking quality of the pasta product,
- improved organoleptic properties compared to high fibre pasta without a plant sterol ester composition,
- enhanced health value including both lowering serum total and LDL-cholesterol levels and having slowly absorbed carbohydrates,
- enhanced cholesterol-lowering effect compared to conventional high-fibre pastas.

The two ingredients, soluble fibres and a plant sterol ester composition, may be incorporated into the daily diet in the form of pasta products containing a sufficient amount of the ingredients. The content of the two ingredients in pasta is typically from 0.5 to 4 g of a plant sterol ester composition (calculated as sterol equivalents) and from 1 to 4 g of soluble dietary fibre in 100 g of a pasta product with a moisture content of about 12%.

For plant sterol esters the intake is preferably about 1 g of plant sterol equivalents/day (from 0.5 to 2.5 g/day) divided into 0.5-5 servings. For soluble fibres the intake is preferably about 2.5 g soluble fibre/day (from 1 to 10 g/day) in 1-5 servings of pasta. In pasta the level of ingredient is preferably 50% of the daily need/serving (from 10% to 200% per serving). One serving of pasta is usually defined as 70 grams of dry pasta (moisture content about 12%).

### Examples

All pastas in the following examples were produced using a conventional high-temperature pasta process (Pavan Mapimpianti/Italy; Termo-Active-System).

### Example 1

Oat pasta with stanol esters and β-glucans

Ingredients:

| | |
|---|---|
| 75% | durum wheat flour |
| 22% | oat flour enriched with β-glucan |
| 3% | plant stanol fatty acid ester |

The content of soluble fibre (β-glucan) of pasta obtained is 2.5 g/100 g and the plant sterol equivalent content is 1.8 g/100 g of dry pasta (moisture content 12%).

### Example 2

Rye pasta with sterol ester and β-glucans

| | |
|---|---|
| 71.5% | wheat (durum or soft wheat) |
| 20% | whole grain rye flour |
| 6% | oat flour enriched with β-glucan |
| 2.5% | plant sterol fatty acid ester |

The soluble fibre content is 2 g/100 g and the plant sterol equivalent content 1.5 g/100 g of dry pasta (moisture content 12%).

### Example 3

Rye pasta with sterol esters

| | |
|---|---|
| 66.5% | durum wheat flour |
| 30% | whole grain rye flour |
| 3.5% | plant sterol fatty acid ester |

The soluble fibre content is 1.2 g/100 g and the plant sterol equivalent content 2.1 g/100 g of dry pasta (moisture content 12%).

### Example 4

Wheat pasta with stanol esters

| | |
|---|---|
| 55% | soft wheat flour |
| 45% | durum wheat flour |
| 5% | plant stanol fatty acid ester |

The plant sterol equivalent content of the pasta is 3 g/100 g of dry pasta (moisture content 12%).

### Example 5

Durum wheat pasta with stanol ester

| | |
|---|---|
| 97.5% | durum wheat flour |
| 2.5% | plant stanol fatty acid ester |

The plant sterol equivalent content of the pasta is 1.5 g/100 g of dry pasta (moisture content 12%). The positive effect on the organoleptic properties of the plant sterol ester composition was recognised at a prolonged warm-keeping of the product.

**Table 1**

| Comparing of the sensory and structure characteristics in the pasta products with and without plant sterols. (The marks given for surface and structure evaluation are 1 (unacceptable) -5 (excellent)). Test products 1 and 2 were overcooked 16 minutes and test products 3 and 4 were cooked for 8 minutes using standard cooking conditions. | | | | |
|---|---|---|---|---|
| | **1 Durum wheat pasta (as Example 5, but without stanol ester)** | **2 Durum wheat pasta + stanol ester (Example 5)** | **3 Oat pasta + β-glucan (as Example 1, but without stanol ester)** | **4 Oat pasta+ β-glucan + stanol ester (Example 1)** |
| Amount of stanol ester (%) | 0 | 2.5 | 0 | 3 |
| | | | | |
| **Appearance before cooking** | bright, clear yellow | yellow, good | brownish, dark white and brown spots | little bit more matt than 3 |
| | | | | |
| **Appearance after cooking** | bright, good yellow | lighter yellow than 1 | quite dark | more greyish than 3 |
| | | | | |
| **Surface** | 3½ | 4 | 3 | 3+ |
| | Good | very good | medium good | medium good |
| | a bit sticky | slippery | a bit sticky | not as sticky as 3 |
| | | | | |
| **Structure** | 4- | 4 | 3+ | 3½ |
| | Good | good | medium good | more "al dente" than 3 |
| | softer than 2 | more "al dente" than 1 | softer than 4 | |

## Claims

1. A method for improving the cooking quality of a pasta product comprising adding a plant sterol ester composition to the pasta dough or to any component of the pasta dough, comprising at least a cereal component and water, before conventional processing of the dough to a pasta product.

2. The method according to claim 1, wherein the plant sterol ester composition is sprayed to the cereal component or part of the cereal component.

3. A pasta product with improved cooking quality, wherein the pasta product comprises on product dry weight 0.27-14.5 weight-% of a plant sterol ester composition, 65.5-99.73 weight-% of a cereal component and 0-20 weight % of an additive composition.

4. The pasta product according to claim 3, wherein the pasta product has a water content of 8-30 weight-%.

5. The pasta product according to claim 4, wherein the pasta product is a dry pasta having a water content of 8-13 weight-%, preferably 11-13 weight-%, and most preferably about 12 weight-%.

6. The pasta product according to claim 4, wherein the pasta product is a fresh pasta having a water content of 19-26 weight-%, preferably 21-23 weight-%, and most preferably about 22 weight-%.

7. The pasta product according to any of claims 3 to 6, wherein the plant sterol ester composition comprises at least 55 weight-% of plant stanol fatty acid esters, preferably at least 85 weight-%.

8. The pasta product according to any one of claims 3 to 7, wherein the cereal component is chosen from the group consisting of durum wheat, soft wheat, oat, rye, barley, rice, triticale, corn, buckwheat, millet, sorghum, a cereal flour enriched with dietary fibre, wholesome cereal flour and mixtures of any of these.

9. The pasta product according to any one of claims 3 to 8, wherein the cereal component comprises at least 4.0 weight-% of dietary fibre calculated on pasta product dry weight.

10. The pasta product according to any one of claims 5 and 7-9, wherein the amount of plant sterol ester composition is from 0.15 to 8 g (calculated as sterol equivalents) and the amount of dietary fibres is from 1 to 20 g per 100 g of the dry pasta product with a moisture content of 8-13 weight-%, preferably about 12 weight-%.

11. The pasta product according to any one of claims 5, 7 and 8, wherein the pasta comprises 3.5 to 20 weight-% of dietary fibre, whereof at least 1 weight-%, preferably 1 to 10 weight-%, more preferably 1.5 to 6 weight-% is soluble, and 0.25 to 5 weight-%, preferably 0.4 to 4 weight-% of a plant sterol ester composition (calculated as sterol equivalents).

12. The pasta product according to any one of claims 6 to 8, wherein the pasta comprises 3.1 to 17.7 weight-% of dietary fibre, whereof at least 0.88 weight-%, preferably 0.88 to 8.8 weight-%, more preferably 1.3 to 5.3 weight-% is soluble, and 0.22 to 4.4 weight-%, preferably 0.35 to 3.5 weight-% of a plant sterol ester composition (calculated as sterol equivalents).

13. The pasta product according to any one of claims 3 to 12, wherein the amounts of the dietary fibre and a plant sterol ester composition are such that the dietary fibre is consumed at a rate of 1 g to 10 g, preferably 2 g to 5 g per day and the plant sterol ester composition is consumed at a rate of 0.25 g to 5 g (calculated as sterol equivalents), preferably 0.5 to 2.5 g per day.

14. Use of plant sterol esters in the preparation of pasta products for improving the cooking quality of the pasta products.

15. An improved process for preparing a pasta product, the improvement comprising adding to a pasta dough or to any of its components plant sterol esters, thereby obtaining a pasta product with improved cooking quality.

16. The process according to claim 15, wherein the plant sterol esters comprise at least 55 weight-% of plant stanol fatty acid esters, preferably at least 85 weight-% and most preferably at least 95 weight-%.

17. The process according to claim 15 or 16, wherein the amount of added plant sterol esters is from 0.15 to 8 g (calculated as sterol equivalents) and the amount of dietary fibres in the dry pasta product with a moisture content of 8-13 weight-%, preferably about 12 weight-%, is from 1 to 20 g per 100 g, preferably at least 3.5 g per 100 g.

18. The process according to any one of claims 15 to 17, wherein the pasta comprises at least 4.0 weight-% of dietary fibres calculated on the dry weight pasta product.

## Patentansprüche

1. Verfahren zum Verbessern der Kochqualität eines Pastaerzeugnisses, umfassend das Hinzufügen einer Pflanzensterolesterzusammensetzung zum Pastateig oder zu irgendeiner Komponente des Pastateigs, umfassend zumindest eine Getreidekomponente und Wasser, vor der konventionellen Verarbeitung des Teigs zu einem Pastaerzeugnis.

2. Verfahren nach Anspruch 1, wobei die Pflanzensterolesterzusammensetzung auf die Getreidekomponente oder einen Teil der Getreidekomponente gesprüht wird.

3. Pastaerzeugnis mit verbesserter Kochqualität, wobei das Pastaerzeugnis im Trockengewicht des Erzeugnisses 0,27 bis 14,5 Gewichts-% einer Pflanzensterolesterzusammensetzung, 65,5 bis 99,73 Gewichts-% einer Getreidekomponente und 0 bis 20 Gewichts-% einer Zusatzzusammensetzung umfasst.

4. Pastaerzeugnis nach Anspruch 3, wobei das Pastaerzeugnis einen Wassergehalt von 8 bis 30 Gewichts-% hat.

5. Pastaerzeugnis nach Anspruch 4, wobei das Pastaerzeugnis eine trockene Pasta ist, die einen Wassergehalt von 8 bis 13 Gewichts-%, vorzugsweise 11 bis 13 Gewichts-% und am meisten bevorzugt etwa 12 Gewichts-% hat.

6. Pastaerzeugnis nach Anspruch 4, wobei das Pastaerzeugnis eine frische Pasta ist, die einen Wassergehalt von 19 bis 26 Gewichts-%, vorzugsweise 21 bis 23 Gewichts-% und am meisten bevorzugt etwa 22 Gewichts-% hat.

7. Pastaerzeugnis nach einem der Ansprüche 3 bis 6, wobei die Pflanzensterolesterzusammensetzung mindestens 55 Gewichts-% von Pflanzenstanolfettsäureestern, vorzugsweise mindestens 85 Gewichts-% umfasst.

8. Pastaerzeugnis nach einem der Ansprüche 3 bis 7, wobei die Getreidekomponente ausgewählt ist aus der Gruppe bestehend aus Hartweizen, Weichweizen, Hafer, Roggen, Gerste, Reis, Triticale, Mais, Buchweizen, Hirse, Durra, einem Getreidemehl, das mit Ballaststoffen angereichert ist, Vollkorngetreidemehl und Mischungen davon.

9. Pastaerzeugnis nach einem der Ansprüche 3 bis 8, wobei die Getreidekomponente mindestens 4,0 Gewichts-% Ballaststoffe umfasst, berechnet im Bezug auf das Trockengewicht des Pastaerzeugnisses.

10. Pastaerzeugnis nach einem der Ansprüche 5 und 7 bis 9, wobei die Menge der Pflanzensterolesterzusammensetzung 0,15 bis 8 g (berechnet als Sterolequivalente) und die Menge an Ballaststoffen 1 bis 20 g pro 100 g des trockenen Pastaerzeugnisses mit einem Feuchtigkeitsgehalt von 8 bis 13 Gewichts-%, vorzugsweise etwa 12 Gewichts-% ist.

11. Pastaerzeugnis nach einem der Ansprüche 5, 7 und 8, wobei die Pasta 3,5 bis 20 Gewichts-% Ballaststoffe umfasst, wovon mindestens 1 Gewichts-%, vorzugsweise 1 bis 10 Gewichts-%, stärker bevorzugt 1,5 bis 6 Gewichts-% unlöslich sind, und 0,25 bis 5 Gewichts-%, vorzugsweise 0,4 bis 4 Gewichts-% einer Pflanzensterolesterzusammensetzung (berechnet als Sterolequivalente).

12. Pastaerzeugnis nach einem der Ansprüche 6 bis 8, wobei die Pasta 3,1 bis 17,7 Gewichts-% Ballaststoffe umfasst, wovon mindestens 0,88 Gewichts-%, vorzugsweise 0,88 bis 8,8 Gewichts-%, stärker bevorzugt 1,3 bis 5,3 Gewichts-% löslich sind, und 0,22 bis 4,4 Gewichts-%, vorzugsweise 0,35 bis 3,5 Gewichts-% einer Pflanzensterolesterzusammensetzung (berechnet als Sterolequivalente).

13. Pastaerzeugnis nach einem der Ansprüche 3 bis 12, wobei die Mengen der Ballaststoffe und einer Pflanzensterolesterzusammensetzung so sind, dass die Ballaststoffe in einem Maß von 1 g bis 10 g, vorzugsweise 2 g bis 5 g pro Tag verzehrt werden und die Pflanzensterolesterzusammensetzung in einem Maß von 0,25 g bis 5 g (berechnet als Sterolequivalente), vorzugsweise 0,5 bis 2,5 g pro Tag verzehrt wird.

14. Verwendung von Pflanzensterolestern in der Herstellung von Pastaerzeugnissen zum Verbessern der Kochqualität der Pastaerzeugnisse.

15. Verbessertes Verfahren für die Herstellung eines Pastaerzeugnisses, wobei die Verbesserung das Hinzufügen von Pflanzensterolestern zu einem Pastateig oder einem seinem Komponenten umfasst, wobei ein Pastaerzeugnis mit verbesserter Kochqualität erhalten wird.

16. Verfahren nach Anspruch 15, wobei die Pflanzensterolester mindestens 55 Gewichts-% von Pflanzenstanolfettsäureestern, vorzugsweise mindestens 85 Gewichts-% und am meisten bevorzugt mindestens 95 Gewichts-% umfassen.

17. Verfahren nach Anspruch 15 oder 16, wobei die Menge zugesetzter Pflanzensterolester von 0,15 bis 8 g (berechnet als Sterolequivalente) ist und die Menge an Ballaststoffen in dem trockenen Pastaerzeugnis mit einem Feuchtigkeitsgehalt von 8 bis 13 Gewichts-%, vorzugsweise etwa 12 Gewichts-%, 1 bis 20 g pro 100 g beträgt, vorzugsweise mindestens 3,5 g pro 100 g.

18. Verfahren nach einem der Ansprüche 15 bis 17, wobei die Pasta mindestens 4,0 Gewichts-% Ballaststoffe umfasst, berechnet bezogen auf das Trockengewicht des Pastaerzeugnisses.

## Revendications

1. Procédé d'amélioration de la qualité de cuisson de pâtes alimentaires comprenant l'ajout d'une composition d'ester de phytostérol dans la préparation des pâtes ou dans tout autre composant de la préparation des pâtes, comprenant au moins un composant céréalier et de l'eau, avant le traitement conventionnel de la préparation en pâtes alimentaires.

2. Procédé selon la revendication 1, dans lequel la composition d'ester de phytostérol est pulvérisée sur le composant céréalier ou une partie du composant céréalier.

3. Pâtes alimentaires avec une qualité de cuisson améliorée, où les pâtes alimentaires comprennent en poids sec de produit de 0,27 à 14,5 % en poids d'une composition d'ester de phytostérol, de 65,5 à 99,73 % en poids d'un composant céréalier et de 0 à 20 % en poids d'une composition d'additif.

4. Pâtes alimentaires selon la revendication 3, où les pâtes alimentaires ont une teneur en eau de 8 à 30 % en poids.

5. Pâtes alimentaires selon la revendication 4, où les pâtes alimentaires sont des pâtes sèches ayant une teneur en eau de 8 à 13 % en poids, de préférence de 11 à 13 % en poids, et de manière préférée entre toutes d'environ 12 % en poids.

6. Pâtes alimentaires selon la revendication 4, où les pâtes alimentaires sont des pâtes fraîches ayant une teneur en eau de 19 à 26 % en poids, de préférence de 21 à 23 % en poids, et de manière préférée entre toutes d'environ 22 % en poids.

7. Pâtes alimentaires selon l'une quelconque des revendications 3 à 6, où la composition d'ester de phytostérol comprend au moins 55 % en poids d'esters d'acides gras de phytostanol, de préférence au moins 85 % en poids.

8. Pâtes alimentaires selon l'une quelconque des revendications 3 à 7, où le composant céréalier est choisi dans le groupe constitué par le blé dur ambré, le blé tendre, l'avoine, le seigle, l'orge, le riz, le triticale, le maïs, le sarrasin, le millet, le sorgho, une farine céréalière enrichie en fibres alimentaires, de la farine céréalière saine et des mélanges de ceux-ci.

9. Pâtes alimentaires selon l'une quelconque des revendications 3 à 8, où le composant céréalier comprend au moins 4,0 % en poids de fibres alimentaires calculés sur le poids sec des pâtes alimentaires.

10. Pâtes alimentaires selon l'une quelconque des revendications 5 et 7 à 9, où la quantité de la composition d'ester de phytostérol est de 0,15 à 8 g (calculés comme équivalents de stérol) et la quantité de fibres alimentaires est de 1 à 20 g pour 100 g de pâtes alimentaires sèches avec une teneur en humidité de 8 à 13 % en poids, de préférence d'environ 12 % en poids.

11. Pâtes alimentaires selon l'une quelconque des revendications 5, 7 et 8, où les pâtes alimentaires comprennent de 3,5 à 20 % en poids de fibres alimentaires, dont au moins 1 % en poids, de préférence de 1 à 10 % en poids, de manière plus préférée de 1,5 à 6 % en poids sont solubles, et de 0,25 à 5 % en poids, de préférence de 0,4 à 4 % en poids d'une composition d'ester de phytostérol (calculés comme équivalents de stérol).

12. Pâtes alimentaires selon l'une quelconque des revendications 6 à 8, où les pâtes comprennent de 3,1 à 17,7 % en poids de fibres alimentaires, dont au moins 0,88 % en poids, de préférence de 0,88 à 8,8 % en poids, de manière plus préférée de 1,3 à 5,3 % en poids sont solubles, et de 0,22 à 4,4 % en poids, de préférence de 0,35 à 3,5 % en poids d'une composition d'ester de phytostérol (calculés comme équivalents de stérol).

13. Pâtes alimentaires selon l'une quelconque des revendications 3 à 12, où les quantités de fibres alimentaires et d'une composition d'ester de phytostérol sont telles que la fibre alimentaire est consommée dans une proportion de 1 g à 10 g, de préférence de 2 g à 5 g par jour et la composition d'ester de phytostérol est consommée dans une proportion de 0,25 g à 5 g (calculés comme équivalents de stérol), de préférence de 0,5 à 2,5 g par jour.

14. Utilisation d'esters de phytostérol dans la préparation de pâtes alimentaires pour améliorer la qualité de cuisson des pâtes alimentaires.

15. Procédé de préparation amélioré de pâtes alimentaires, l'amélioration comprenant l'ajout dans une préparation pour pâtes ou l'un quelconque de ses composants d'esters de phytostérol, pour obtenir ainsi des pâtes alimentaires avec une qualité de cuisson améliorée.

16. Procédé selon la revendication 15, où les esters de phytostérol comprennent au moins 55 % en poids d'esters d'acides gras de phytostanol, de préférence au moins 85 % en poids et de manière préférée entre toutes au moins 95 % en poids.

17. Procédé selon la revendication 15 ou 16, où la quantité d'esters de phytostérol ajoutée est de 0, 15 à 8 g (calculés comme équivalents de stérol) et la quantité de fibres alimentaires dans les pâtes alimentaires sèches avec une teneur en humidité de 8 à 13 % en poids, de préférence d'environ 12 % en poids, est de 1 à 20 g pour 100 g, de préférence d'au moins 3,5 g pour 100 g.

18. Procédé selon l'une quelconque des revendications 15 à 17, où les pâtes comprennent au moins 4,0 % en poids de fibres alimentaires calculés sur le poids sec des pâtes alimentaires.
